# EUROPÄISCHE PATENTSCHRIFT

(11) **EP 2 927 439 B1**
(45) Veröffentlichungstag und Bekanntmachung des Hinweises auf die Patenterteilung: **24.08.2016**
(21) Anmeldenummer: 15151363.7
(22) Anmeldetag: 16.01.2015
(51) Int. Cl.: F01L 1/344, F16K 31/06

(54) **Hydraulikventil für einen Schwenkmotorversteller einer Nockenwelle**
Hydraulic valve for a pivoting engine adjuster of a camshaft
Soupape hydraulique pour un moteur oscillant d'un arbre à came

(30) Priorität: 27.02.2014 DE 102014102617
(43) Veröffentlichungstag der Anmeldung: 07.10.2015
(73) Patentinhaber: Hilite Germany GmbH, 97828 Marktheidenfeld (DE)
(72) Erfinder: Oppel, Michael, 97788 Neuendorf (DE); Gruber, Erik, 97828 Marktheidenfeld (DE); Goll, Jürgen, 97906 Collenberg (DE)

(56) Entgegenhaltungen:
- EP-A1- 2 466 081
- EP-A2- 1 477 636
- WO-A1-2013/185943
- AU-A- 7 097 481
- CH-A- 335 273
- CH-A- 470 616
- DE-A1-102006 016 317
- DE-A1-102008 036 182

## Beschreibung

Die Erfindung betrifft ein Hydraulikventil für einen Schwenkmotorversteller einer Nockenwelle nach dem Oberbegriff des Patentanspruchs 1.

Hydraulikventile für Schwenkmotorenversteller einer Nockenwelle sind hinlänglich bekannt. Das Hydraulikventil weist einen durchströmbaren Ventilkolben auf, welcher in einem Ventilgehäuse des Hydraulikventils axial bewegbar aufgenommen ist. Das Ventilgehäuse ist durchströmbare Kanäle aufweisend ausgebildet, so dass ein Hydraulikfluid über diese Kanäle und mit Hilfe eines im Ventilkolben ausgebildeten Kanalsystems auf unterschiedlichen Strömungswegen in das Ventilgehäuse ein- oder ausströmen kann. Üblicherweise sind am Ventilgehäuse ein durchströmbarer erster Arbeitsanschluss, ein durchströmbarer zweiter Arbeitsanschluss und ein durchströmbarer Versorgungsanschluss ausgebildet. Der erste Arbeitsanschluss und der zweite Arbeitsanschluss sind mit dem Schwenkmotorenversteller verbunden und über diese Anschlüsse ist das Hydraulikfluid sowohl in das Hydraulikventil als auch aus dem Hydraulikventil förderbar. Zur Versorgung des Hydraulikventils mit dem mit Hilfe einer Fördereinrichtung geförderten Hydraulikfluid weist das Ventilgehäuse den Versorgungsanschluss auf. Zur Nutzung von Nockenwellenwechselmomente sind in den Strömungswegen der Arbeitsanschlüsse Rückschlagventile entweder im Ventilgehäuse oder im Ventilkolben positioniert. Des Weiteren ist in einem Strömungsweg des Versorgungsanschlusses ein Rückschlagventil ausgebildet, so dass das Hydraulikfluid über den Versorgungsanschluss in das Ventilgehäuse bzw. in den Ventilkolben strömen kann, allerdings ein Austritt des Hydraulikfluids über den Strömungsweg des Versorgungsanschlusses versperrt ist. Mit Hilfe der Rückschlagventile ist das Hydraulikfluid im Hydraulikventil druckabhängig steuerbar.

So geht beispielsweise aus der Offenlegungsschrift DE 10 2009 043 154 A1 ein Hydraulikventil mit einem in Form eines Kugelrückschlagventils ausgebildeten Rückschlagventil hervor, welches im Strömungsweg des Versorgungsanschlusses zwischen dem Versorgungsanschluss und der Fördereinrichtung angeordnet ist.

Aus der Offenlegungsschrift DE 10 2008 006 179 A1 ist ein Hydraulikventil bekannt, welches eine Führungshülse für den im Ventilgehäuse axial bewegbaren Ventilkolben aufweist. In der Führungshülse liegen Öffnungen vor, welche zur Durchströmung des Hydraulikventils mit den durchströmbaren Kanälen im Ventilgehäuse ausgebildet sind. Zwischen dem Ventilgehäuse und der Führungshülse ist ein Filtergewebe angeordnet. Üblicherweise wird das Hydraulikfluid in einem Versorgungskanal, welchem der Versorgungsanschluss zugeordnet ist mit einer entsprechenden Trennvorrichtung, bspw. einer Öltrennhülse, gefiltert. Das Filtergewebe ist zum Filtern des Hydraulikfluids vorgesehen, bspw. zum Zurückhalten von Spänen, welche bei einer Montage der Trennvorrichtung entstehen können. Späne, die in das Ventilgehäuse gelangen können zum einen den Ventilkolben in seiner Bewegbarkeit behindern, zum anderen die Kanäle und das Kanalsystem blockieren, so dass das Hydraulikventil seine Funktion nicht mehr erfüllen kann. Im Abschnitt des Versorgungsanschlusses ist ein Rückschlagventil in Form eines Kugelrückschlagventils ausgebildet zur Vermeidung eines Rückströmens des Hydraulikfluids aus dem Ventilkolben in den Versorgungsanschluss.

Die Offenlegungsschrift DE 10 2008 036 182 A1 offenbart ein Hydraulikventil, welches zur vereinfachten Versorgung von Nockenwellenlagern vorgesehen ist. Zur Sperrung des Hydraulikfluidabflusses aus dem Hydraulikventil in den Versorgungskanal der Nockenwellenlager ist an einer der Nockenwelle zugewandt ausgebildeten Stirnseite des Hydraulikventils ein Rückschlagventil in Firm eines Kugelrückschlagventils angeordnet.

Eine Verbesserung des Ansprechverhaltens soll mit Hilfe des der Offenlegungsschrift DE 10 2008 036 876 A1 zu entnehmenden Hydraulikventils mit zwei federbelasteten Rückschlagventilen erzielt werden. Diese beiden Rückschlagventile sind zur Sperrung des Abströmens von Hydraulikfluid in Richtung der Fördereinrichtung vorgesehen. Mit Hilfe der beiden Rückschlagventile, im Gegensatz zu nur einem Rückschlagventil, soll zum einen ein Rückströmen des Hydraulikfluids gesichert vermieden werden. Des Weiteren kann mit Hilfe der beiden Rückschlagventile ein effektiver Durchlassquerschnitt den entsprechende Bedingungen zur schnellen Beaufschlagung des Hydraulikventils und somit zu einem verbesserten Ansprechverhalten des Hydraulikventils angepasst werden. Das heißt; dass beispielsweise in einem Betrieb eines die Nockenwelle aufweisenden Verbrennungsmotors bei großen Drehzahlen ein entsprechend großer Hydraulikfluidstrom gefördert wird, welcher zur schnellen Beaufschlagung des Hydraulikventils einen großen effektiven Durchlassquerschnitt benötigt. Im Vergleich dazu ist zur Erzielung einer schnellen Beaufschlagung bei niedrigen Drehzahlen ein kleiner effektiver Durchlassquerschnitt vorteilhaft.

Eine von einem Kugelrückschlagventil sich unterscheidende Form eines Rückschlagventils für ein Hydraulikventil geht aus der Offenlegungsschrift WO 2009/089960 A1 hervor. Zur Erzielung eines schnellen Ansprechverhaltens des Hydraulikventils und einer Steigerung einer Verstellgeschwindigkeit des Nockenwellenverstellers ist ein Schließelement des Rückschlagventils in einem Strömungsabschnitt des Versorgungsanschlusses in Form einer Scheibe offenbart, welche in einem Zuströmkanal des Hydraulikventils für den Versorgungsanschluss ausgebildet ist. Die Scheibe, zum Öffnen und Schließen des Zuströmkanals, weist ein Schließelement auf, welches an der Scheibe federnd gelagert ist. Offenbart ist eine Scheibe mit einem mit Federelementen ausgebildeten Ring, innerhalb dessen das Schließelement ausgebildet ist. Das Schließelement ist einstückig mit dem Ring verbunden. Die Federelemente sind mit Hilfe von die Scheibe über ihr Dicke vollständig durchdringenden, rillenartigen Kanälen dargestellt, so dass ein zwischen jeweils zwei Kanälen ausgebildetes Federelement entlang einer Längsachse der Scheibe federnd bewegbar ist. Beabsichtigt ist aufgrund einer im Vergleich zu einem Kugelrückschlagventil größeren effektiven Anströmfläche und einer geringeren Massenträgheit ein schnelleres Schließen bzw. Öffnen des Rückschlagventils zu erzielen. Ein Hydraulikzufluss aus dem Versorgungsanschluss in den Ventilkolben erfolgt über die spiral- bzw. wellenbogenförmigen Kanäle, welche zugleich der Bereitstellung der Federelemente dienen, sowie über ein Abheben des Schließelementes vom Zuströmkanal, allerdings in der Weise, dass die Scheibe an ihrem Außenumfang fixiert ist.

Aus der EP 1 477 636 A2 ist ein Nockenwellenversteller bekannt, dessen Hydraulikventil an einer vom Nockenwellenanschluss abgewandten Seite des Nockenwellenverstellers angeordnet ist, um für den Einsatz bei beengten Platzverhältnissen geeignet zu sein. Ein vor dem Hydraulikventil angeordnetes, gegen den Druckanschluss sperrendes Rückschlagventil mit einem Ventilteller verbessert insgesamt die Performance des Systems.

Die Aufgabe der vorliegenden Erfindung ist es, ein Hydraulikventil für einen Schwenkmotorversteller einer Nockenwelle bereitzustellen, welches ein gesichertes Schließen sowie eine ausreichende Versorgung des Hydraulikventils sowohl bei niedrigen als auch hohen Drehzahlen der Nockenwelle sicherstellt und einen einfachen und kostengünstigen Aufbau aufweist.

Die Aufgabe wird erfindungsgemäß durch ein Hydraulikventil für einen Schwenkmotorversteller einer Nockenwelle mit den Merkmalen das Patentanspruchs 1 gelöst. Vorteilhafte Ausgestaltungen mit zweckmäßigen und nicht-trivialen Weiterbildungen der Erfindung sind in den jeweiligen Unteransprüchen angegeben.

Das erfindungsgemäße Hydraulikventil für einen Schwenkmotorversteller einer Nockenwelle mit einem Ventilgehäuse und einem im Ventilgehäuse entlang einer Längsachse des Ventilgehäuses verschiebbaren Ventilkolbens, weist ein Rückschlagventil auf, welches in einem Zuströmkanal des Ventilgehäuses stromauf des Ventilkolbens und stromab eines Versorgungsanschlusses des Ventilgehäuses aufgenommen ist. Der Versorgungsanschluss dient einer Zuführung von Hydraulikfluid in das Hydraulikventil. Das Rückschlagventil ist im Zuströmkanal angeordnet, so dass dieser Zuströmkanal mit Hilfe des Rückschlagventils zu Öffnen oder zu Schließen ist, damit das Hydraulikfluid nicht aus dem Zuströmkanal in Richtung des Versorgungsanschlusses zurückströmen kann.

Das Rückschlagventil umfasst ein durchströmbares, scheibenförmiges, zumindest eine erste Durchlassöffnung aufweisendes erstes Schließelement und ein durchströmbares zweites Schließelement mit zumindest einer zweiten Durchlassöffnung. Da beide Schließelemente eine Durchlassöffnung aufweisen, ist es zur Erzielung einer Dichtwirkung bzw. eines Schließens des Rückschlagventils notwendig, dass die Schließelemente so angeordnet sind, dass die erste Durchlassöffnung einem undurchströmbaren ersten Abschnitt des zweiten Schließelementes und die zweite Durchlassöffnung einem undurchströmbaren zweiten Abschnitt des ersten Schließelementes gegenüberliegen, derart, dass im Rahmen einer Relativbewegung der beiden Schließelemente zueinander ein Öffnen oder Schließen des Rückschlagventils erfolgt. Mit Hilfe der beiden entsprechend gestalteten Schließelemente ist auf einfache Weise ein gesichertes Schließen des Rückschlagventils erzielbar, da die Durchlassöffnungen beider Schließelemente als Resultat einer Relativbewegung vom jeweils gegenüberliegenden Schließelement geschlossen werden können. Mit anderen Worten bedeutet dies, dass, sofern sich die beiden Schließelemente relativ aufeinander zu bewegen, ein dichtender Kontakt zwischen den beiden Schließelementen ausbildbar ist, wobei aufgrund der Positionierung der Durchlassöffnungen, diese geschlossen sind.

Ein Öffnen des Rückschlagventils ist schnell erzielbar, da bereits bei einer geringen Relativbewegung der beiden Schließelemente zueinander, in der sie sich relativ voneinander entfernen, die Durchlassöffnungen freigegeben werden, so dass bereits bei einer geringen Entfernung der beiden Schließelemente voneinander Hydraulikfluid aus der ersten Durchlassöffnung zwischen das erste Schließelemente und das zweite Schließelemente dringen kann, um durch die zweite Durchlassöffnung in den Ventilkolben zu strömen.

In einer weiteren Ausgestaltung des erfindungsgemäßen Hydraulikventils sind die erste Durchlassöffnung in einem äußeren Abschnitt des ersten Schließelementes und die zweite Durchlassöffnung in einem Zentrum des Schließelementes ausgebildet.

Gegenüber den aus dem Stand der Technik bekannten Rückschlagventilen ist der Vorteil darin zu sehen, dass einerseits eine gesicherte Dichtwirkung aufgrund der entsprechend zueinander angeordneten Durchlassöffnungen erzielbar ist und andererseits ist es möglich schnell einen hinreichend groß ausgebildeten Strömungsquerschnitt freizugeben, derart, dass ein schnelles Ansprechen des Hydraulikventils realisiert ist.

Vorteilhafterweise ist das erste Schließelement unabhängig vom zweiten Schließelement ausgebildet, so dass eine unkomplizierte und somit günstige Herstellung realisierbar ist.

In einer weiteren Ausgestaltung des erfindungsgemäßen Hydraulikventils sind die erste Durchlassöffnung in einem ersten äußeren Abschnitt des ersten Schließelementes und die zweite Durchlassöffnung in einem zweiten inneren Abschnitt des zweiten Schließelementes ausgebildet. Dies hat den Vorteil, dass das Hydraulikfluid beim Einströmen in den Ventilkolben aus der zweiten Durchlassöffnung keine bzw. nahezu keine Änderung seiner Strömungsrichtung erfährt, und somit Strömungsverluste weitestgehend vermieden sind, so dass auch diese Ausgestaltung zu einem schnelleren Ansprechverhalten des Hydraulikfluids beiträgt.

Der Vorteil dieser erfinderischen Lösung ist weiter darin zu sehen, dass scheibenförmige Schließelemente mit den entsprechend angeordneten Durchlassöffnungen kostengünstig hergestellt werden können. So sind die Schließelemente bspw. aus einem Blech, welches einfach zu bearbeiten ist, herzustellen. Die Durchlassöffnungen sind bspw. gleichzeitig mit der Herstellung der Scheibe durch ein Stanzverfahren in die Scheibe einzubringen.

Ein weiterer Vorteil der scheibenförmigen Schließelemente ist ein geringer Verschleiß der im Betrieb bei einem Schließen des Rückschlagventils aufeinandertreffenden Bauteile aufgrund einer im Vergleich mit den Rückschlagventilen des Standes der Technik größeren Auflage- bzw. Aufprallfläche.

Eine axiale Bewegung eines der beiden Schließelemente, bevorzugterweise des nahe dem Ventilkolben positionierten zweiten Schließelementes, ist einfachst mit Hilfe eines Federelementes unterstützt, welches bevorzugt als Schraubenfeder ausgebildet ist. Das Federelement wirkt dabei lediglich unterstützend, dahingehend, dass es zum einen ein schnelleres und zum anderen ein gesichertes Schließen bewirkt, denn bereits eine auf das zweite Schließelement wirkende Druckkraft infolge von ventilkolbenseitig anliegenden Druckstöße wirkende Druckkraft erzielt eine in Richtung des ersten Schließelementes axiale Bewegung des zweiten Schließelementes. Hat das zweite Schließelement das erste Schließelement erreicht, wirkt das Federelement zusätzlich mit seiner Druckkraft für ein gesichertes Schließen.

Insgesamt zeichnet sich das erfindungsgemäße Hydraulikventil durch einen einfachen Aufbau seines Rückschlagelementes auf, so dass eine einfache und schnelle Montage erzielbar ist. Eine axiale Sicherung des Federelementes erfolgt mit Hilfe eines im Hohlzylinder ausgebildeten zweiten Absatzes und eine axiale Sicherung des ersten Schließelementes ist auf einfach Weise mit einem im Zuströmkanal ausgebildeten ersten Absatz und einem im Zuströmkanal in einer Ringnut aufgenommenen Sicherungsring erzielt. Diese Absätze sind dabei beispielweise durch Innendrehen hergestellt. D.h., das Rückschlagventil des erfindungsgemäßen Hydraulikventils zeichnet sich durch eine einfache Herstellung der Schließelemente aus, sowie durch eine einfache Montage, wobei ebenso eine Abhängigkeit der Einbaulage gering ist.

Die erste Durchlassöffnung ist über einen Kreisumfang nutartig und die zweite Durchlassöffnung kreisförmig ausgebildet, so dass ein großer effektiver Strömungsquerschnitt des Rückschlagventils erreichbar ist, dass selbst bei hohen Motordrehzahlen ein schnelles Ansprechen des Hydraulikventils herbeigeführt werden kann, da ausreichend Hydraulikfluid in entsprechend notwendiger kurzer Zeit durch die Durchlassöffnungen in den Versorgungskanal des Ventilkolbens strömen kann.

Aufgrund des Aufbaus des Rückschlagventils ist eine Schmutzanfälligkeit weitestgehend reduziert. Eine Einstellung des Rückschlagventils kann auf ebenso einfache Weise wie die Montage erfolgen. Eine Optimierung der Materialien ermöglicht eine weitere Verbesserung der Reaktionszeit sowie der Dichtheit. Insgesamt zeichnet sich das Rückschlagventil durch eine geringe Belastung der scheibenförmigen Schließelemente und insgesamt der angrenzend an die Schließelemente ausgebildeten Bauteile aus, da neben dem Federelement ausschließlich das zweite Schließelement bewegt werden muss.

Durch das gesicherte Schließen des Rückschlagelementes ist ein Gegendruck auf ein stromauf des Rückschlagelementes, im Strömungsweg des Versorgungsanschlusses vorgesehenen Filter, insbesondere einem Sieb, vermieden, so dass dessen Belastung reduziert und somit seine Haltbarkeit verlängert ist.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Gleichen oder funktionsgleichen Elementen sind identische Bezugszeichen zugeordnet. Aus Gründen der Übersichtlichkeit ist es möglich, dass die Elemente nicht in allen Figuren mit ihrem Bezugszeichen versehen sind, ohne jedoch ihre Zuordnung zu verlieren. Es zeigen:
- Fig. 1: in einem Längsschnitt ein Hydraulikventil für einen Schwenkmotorversteller einer Nockenwelle mit einem Rückschlagventil in Form eines Kugelrückschlagventils gem. dem Stand der Technik,
- Fig. 2: in einem Längsschnitt ein erfindungsgemäßes Hydraulikventil,
- Fig. 3: in einem Längsschnitt ein Ausschnitt des erfindungsgemäßen Hydraulikventils gem. Fig. 2,
- Fig. 4: in einer Draufsicht und einem Längsschnitt ein erstes Schließelement eines Rückschlagventils des Hydraulikventils gem. Fig. 2,
- Fig. 5: in einer Draufsicht und einem Längsschnitt ein zweites Schließelement des Rückschlagventils des Hydraulikventils gem. Fig. 2,
- Fig. 6: in einer Prinzipdarstellung das erste Schließelement und das zweite Schließelement gem. Fig. 4 und 5 in einem Längsschnitt in einer ersten Relativposition,
- Fig. 7: in einer Prinzipdarstellung das erste Schließelement und das zweite Schließelement in einem Längsschnitt in einem zweiten Ausführungsbeispiel in einer zweiten Relativposition,
- Fig. 8: in einer Prinzipdarstellung das erste Schließelement und das zweite Schließelement in einem Längsschnitt in einem dritten Ausführungsbeispiel in der zweiten Relativposition,
- Fig. 9: in einem Längsschnitt ein zweites Ausführungsbeispiel eines erfindungsgemäßen Hydraulikventils, und
- Fig. 10: in einer Draufsicht und einem Längsschnitt ein zweites Schließelement eines Rückschlagventils des Hydraulikventils gem. Fig. 9.

Ein nicht näher dargestellter Schwenkmotorversteller erlaubt während des Betriebes eines nicht näher dargestellten Verbrennungsmotors eine Änderung von Öffnungs- und Schließzeiten von Gaswechselventilen des Verbrennungsmotors herbeizuführen. Hierzu wird mit Hilfe des Schwenkmotorverstellers eine relative Winkellage einer nicht näher dargestellten Nockenwelle des Verbrennungsmotors gegenüber einer nicht näher dargestellten Kurbelwelle des Verbrennungsmotors stufenlos verändert, wobei die Nockenwelle relativ zur Kurbelwelle verdreht wird.

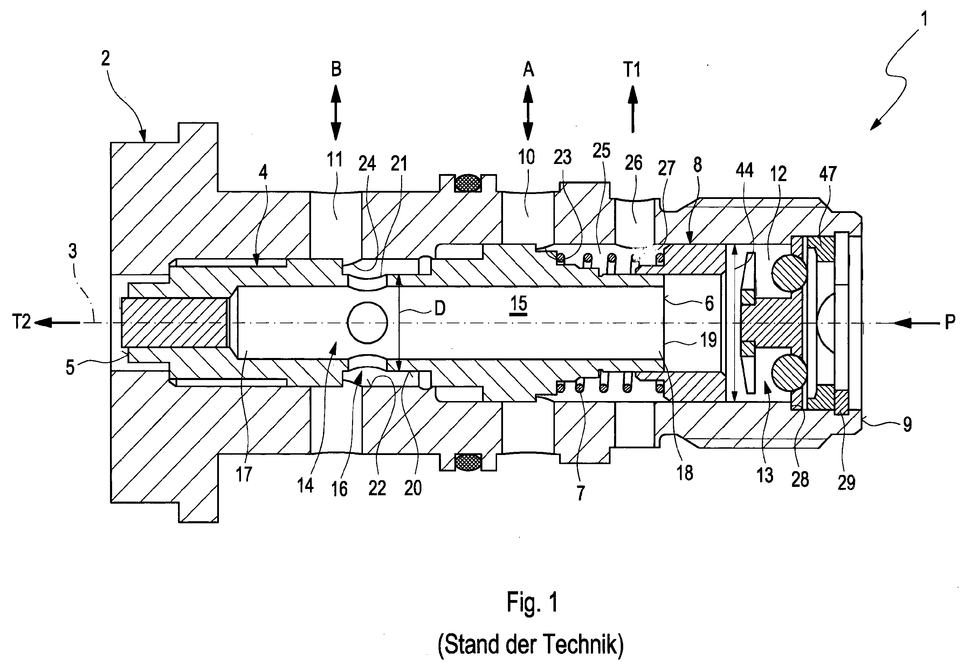

Durch Verdrehen der Nockenwelle werden die Öffnungs- und Schließzeitpunkte der Gaswechselventile so verschoben, dass der Verbrennungsmotor bei der jeweiligen Drehzahl seine optimale Leistung bringt. Eine Steuerung des Schwenkmotorverstellers erfolgt in der Regel mit Hilfe einer elektronischen Steuereinheit, welche anhand von Kenndaten des Verbrennungsmotors einen Zu- und Abfluss eines Hydraulikfluids im Schwenkmotorversteller ausgebildeter Druckkammern steuert. Zur Regelung des Zu- und Abflusses des Hydraulikfluids dient ein von der Steuereinheit mit Hilfe elektrischer Signale gesteuertes Hydraulikventil 1, welches gemäß des Standes der Technik wie in Fig. 1 dargestellt mit einem Rückschlagventil in Form eines Kugelrückschlagventils ausgebildet ist.

Das Hydraulikventil 1 umfasst ein Ventilgehäuse 2 und einen im Ventilgehäuse 2 entlang einer Längsachse 3 des Ventilgehäuses 2 axial bewegbaren Ventilkolben 4. Zur Verschiebung des Ventilkolbens 4 ist eine vom Verbrennungsmotor abgewandt ausgebildete erste Stirnfläche 5 des Ventilkolbens 4 geschlossen, so dass ein nicht näher dargestellter Stößel eines nicht näher dargestellten elektromagnetischen Linearaktors an dieser ersten Stirnfläche 5 anliegen kann. Eine Bestromung des Linearaktors führt zur axialen Verschiebung des Ventilkolbens 4 in Richtung des Verbrennungsmotors, wobei ein an einer zweiten Stirnfläche 6 des Ventilkolbens 4, welche von der ersten Stirnfläche 5 abgewandt ausgebildet ist, angebrachtes Rückhalteelement 7 eine Rückhaltekraft auf den Ventilkolben 4 ausübt, gegen die der Ventilkolben 4 zu verschieben ist. Das Rückhalteelement 7, in diesem Ausführungsbeispiel in Form einer Schraubendruckfeder ausgebildet, stützt sich an einem Hohlzylinder 8 ab, welcher im Bereich der zweiten Stirnfläche 6 mit Presssitz unbewegbar im Ventilgehäuse 2 angeordnet ist.

Der Ventilkolben 4 ist durchströmbar ausgebildet und weist ein Kanalsystem 14 auf, mit einem Versorgungskanal 15 und einer den Versorgungskanal 15 querenden Kanalgruppe 16. Der Versorgungskanal 15 erstreckt sich entlang einer Längsachse des Ventilkolbens 4, welche koaxial zur Längsachse 3 ausgebildet ist, wobei der Versorgungskanal 15 an einem der ersten Stirnfläche 5 zugewandten ersten Kanalende 17 geschlossen und an einem der zweiten Stirnfläche 6 zugewandten zweiten Kanalende 18 geöffnet ist, derart, dass über eine am zweiten Kanalende 18 ausgebildete Eintrittsöffnung 19 des Ventilkolbens 4 Hydraulikfluid in den Versorgungskanal 15 strömen kann.

Die Kanalgruppe 16 ist in Form sich kreuzender Bohrungen ausgebildet, wobei sich jede Bohrung vollständig über einen Durchmesser D des Ventilkolbens 4 erstreckt und an einer Mantelfläche 20 des Ventilkolbens 4 jeweils zwei Austrittsöffnungen 21 bildet. Die Bohrungen sind sternförmig angeordnet, wobei sie eine gemeinsame Schnittfläche bilden, welche im Versorgungskanal 15 durchströmbar angeordnet ist.

Das buchsenartig ausgebildete Ventilgehäuse 2 weist, jeweils durchströmbar, einen Versorgungsanschluss P, einen ersten Arbeitanschluss A, einen zweiten Arbeitsanschluss B, einen ersten Tankzugang T1 und einen zweiten Tankzugang T2 auf. Der erste Arbeitsanschluss A und der zweite Arbeitsanschluss B stehen mit ihnen entsprechend zugeordneten Druckkammern des Schwenkmotorverstellers in Verbindung, so dass das Hydraulikfluid über das Hydraulikventil 1 gesteuert die Druckkammern beaufschlagen kann.

Dem ersten Arbeitsanschluss A und dem zweiten Arbeitsanschluss B sind ein erster Kanal 10 im Ventilgehäuse 2 bzw. ein zweiter Kanal 11 im Ventilgehäuse 2 zugeordnet, welche mit Hilfe von an einer dem Ventilkolben 4 zugewandt ausgebildeten Innenfläche 22 des Ventilgehäuses 2 ausgebildeten ersten Öffnung 23 bzw. zweiten Öffnung 24 eine Beaufschlagung der Kanäle 10, 11 mit dem das Hydraulikventil durchtrömenden Hydraulikfluid ermöglichen.

Je nach gewählter Drehrichtung strömt das Hydraulikfluid in oder aus den Druckkammern. So werden bspw. in der in Fig. 1 dargestellten Position des Ventilkolbens 4, die dem Arbeitsanschluss B zugeordneten Druckkammern mit Hydraulikfluid beaufschlagt. Das Hydraulikfluid strömt in dieser Position des Ventilkolbens 4 aus dem Versorgungsanschluss P über ein in einem Zuströmkanal 12 des Ventilgehäuses 2, welcher zwischen dem Versorgungsanschluss P und dem Hohlzylinder 8 ausgebildet ist, angeordnetes Rückschlagventil 13 und durch den Hohlzylinder 8 über die Eintrittsöffnung 19 in den Versorgungskanal 15.

Die Austrittsöffnungen 21 überdecken zumindest teilweise die zweite Öffnung 24, so dass das Hydraulikfluid aus dem Versorgungskanal 15 über die Austrittsöffnungen 21 und die zweite Öffnung 24 in den zweiten Kanal 11 über den zweiten Arbeitsanschluss B in die entsprechenden Druckkammern strömen kann. Die dem zweiten Arbeitskanal B zugeordneten Druckkammern werden somit mit Hydraulikfluid beaufschlagt. Dies hat zur Folge, dass aus den dem ersten Arbeitsanschluss A zugeordneten Druckkammern Hydraulikfluid entweicht, welches aus dem ersten Kanal 10 über dessen erste Öffnung 23 und einem zwischen der Mantelfläche 20 und der Innenfläche 22 ausgebildeten ersten Spalt 25 in einen dritten Kanal 26 strömt, welcher eine an der Innenfläche 22 ausgebildete dritte Öffnung 27 aufweist, strömt, wobei der dritte Kanal 26 zur Entlastung, d.h. zum Abfließen des Hydraulikfluids mit dem ersten Tankzugang T1 verbunden ist.

Der zweite Tankzugang T2, über welchen das Hydraulikfluid aus dem zweiten Kanal 11 bei entsprechender Position des Ventilkolbens 4 abfließen kann, ist in einem Bereich des Schwenkmotorverstellers stromab der ersten Stirnfläche 5 ausgebildet.

In einer nicht dargestellten weiteren Position des Ventilkolbens 4 ist der Ventilkolben 4 axial in Richtung des Verbrennungsmotors verschoben, so dass der erste Spalt 25 geschlossen ist, allerdings ein axial gegenüberliegender zweiter Spalt zwischen der ersten Öffnung 23 und der Mantelfläche 20 ausgebildet ist, wobei die Austrittsöffnungen 21 nun zumindest teilweise die erste Öffnung 23 überdecken. Über diesen zweiten Spalt kann dann das Hydraulikfluid über die Austrittsöffnungen 21 aus dem Versorgungskanal 15 in die erste Öffnung 23 und somit in den ersten Kanal 10 fließen. Aus dem ersten Kanal 10 strömt das Hydraulikfluid über den ersten Arbeitsanschluss A in die diesem ersten Arbeitsanschluss A zugeordneten Druckkammern, welche mit dem Hydraulikfluid beaufschlagt werden.

Eine Folge dieser Beaufschlagung ist, dass aus den dem zweiten Arbeitsanschluss B zugeordneten Druckkammern Hydraulikfluid entweicht, welches aus dem zweiten Kanal 11 über dessen zweite Öffnung 24 und einem dritten Spalt, welcher zwischen der Mantelfläche 20 und der Innenfläche 22 ausgebildet ist, in den zweiten Tankzugang T2 strömt.

Der Versorgungsanschluss P ist zur Verbindung mit einer nicht näher dargestellten Ölpumpe ausgestaltet, so dass das Hydraulikventil 1 von Hydraulikfluid, welches in diesem Ausführungsbeispiel Öl ist, durchströmbar ist.

Der Versorgungsanschluss P ist an einer Gehäusestirnfläche 9 des Ventilgehäuses 2 angeordnet, welche dem Verbrennungsmotor zugewandt ist. Zur Vermeidung eines Rückströmens des Hydraulikfluids aus dem Ventilgehäuse 2 zum Versorgungsanschluss P ist ein Rückschlagventil 13 im Zuströmkanal 12 angeordnet. Das Rückschlagventil 13 ist in Form eines Kugelrückschlagventils ausgebildet und mit Hilfe eines Sicherungselementes 29 in Form eines Seegerrings und eines Formelementes 47 im Ventilgehäuse 2 bewegungsfrei aufgenommen, wobei es sich an der einem im Zuströmkanal 12 ausgebildeten ringförmigen ersten Absatz 28 axial abstützt.

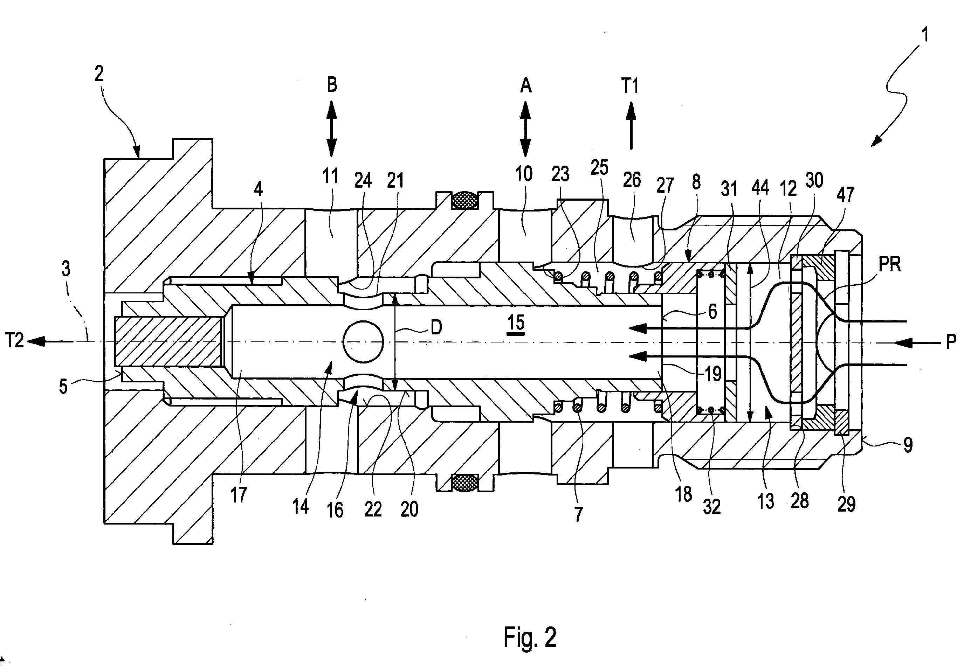

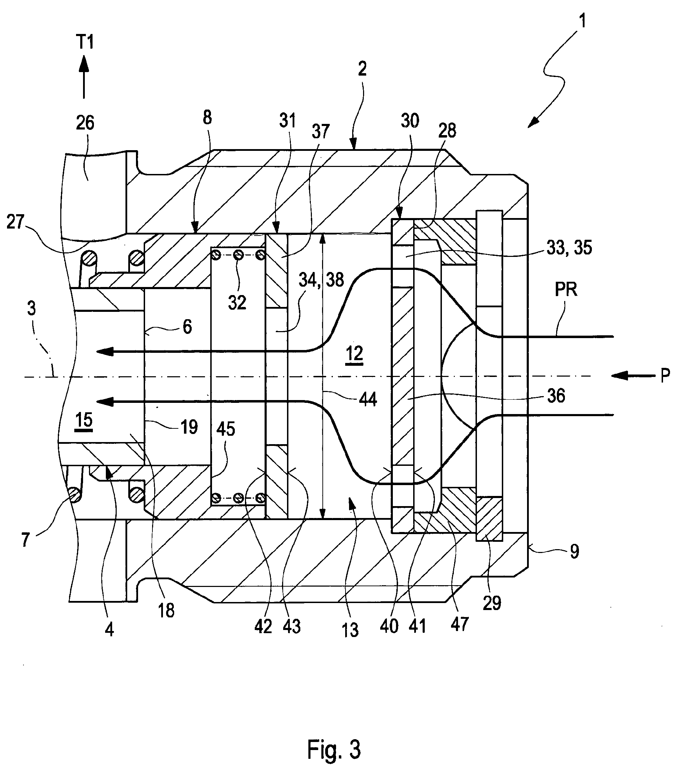

Ein erfindungsgemäßes Hydraulikventil 1 ist gem. Fig. 2 aufgebaut. Eine Detailzeichnung zur deutlicheren Darstellung des Rückschlagventils 13 zeigt in einem Längsschnitt eines Ausschnitts des erfindungsgemäßen Hydraulikventils 1 Fig. 3. Das Rückschlagventil 13 ist scheibenförmig ausgebildet, umfassend ein erstes scheibenförmiges Schließelement 30, welches im Zuströmkanal 12 stromab des Versorgungsanschlusses P im Ventilgehäuse 2 fixiert ist. Zwischen dem Ventilkolben 4 und dem ersten Schließelement 30 ist ein scheibenförmiges zweites Schließelement 31 im Zuströmkanal 12 bewegbar aufgenommen. Das erste Schließelement 30 ist unabhängig vom zweiten Schließelement 31 ausgebildet. Im Zuströmkanal 12 sind die beiden Schließelemente 30, 31 so positioniert, dass eine erste Anströmfläche 40 des ersten Schließelementes 30 sowie eine von der ersten Anströmfläche 40 abgewandt ausgebildete zweite Anströmfläche 41 des ersten Schließelementes 30 bzw. eine dritte Anströmfläche 42 des zweiten Schließelementes 31 sowie eine von der dritten Anströmfläche 42 abgewandt ausgebildete vierte Anströmfläche 43 des zweiten Schließelementes 31 parallel zu einem Strömungsquerschnitt 44 des Zuströmkanals 12 ausgerichtet sind.

Das erste Schließelement 30 ist mit Hilfe des im Zuströmkanal 12 ringförmigen ersten Absatzes 28 im Zuströmkanal 12 sowie mit Hilfe des Sicherungselementes 29 und dem Formteil 47 gegen eine axiale Bewegung gesichert. Zusätzlich ist eine radiale Verdrehung des ersten Schließelements 30 durch eine Presspassung des ersten Schließelementes 30 im Zuströmkanal 12 blockiert.

Gemäß üblicher Rückschlagventile, öffnet sich das Rückschlagventil 13 sofern ein Druck des Hydraulikfluids stromauf des Rückschlagventils 13 größer ist als ein Druck stromab des Rückschlagventils 13, wobei die
Strömungsrichtungsbestimmung aus Richtung des Versorgungsanschlusses P zu sehen ist. Fig. 2 zeigt das erfindungsgemäße Hydraulikventil 1 in einer Stellung, in welcher das Rückschlagventil 13 durchströmbar ist.

Mit Hilfe des Hydraulikfluids wird das zweite Schließelement 31 gegen den Hohlzylinder 8 gedrückt, an welchem es sich abstützen kann. Ein sich am Hohlzylinder 8 mit Hilfe eines im Hohlzylinder 8 ausgebildeten zweiten Absatzes 45 abstützendes Federelement 32, ist dem zweiten Schließelement 31 zur Kontaktierung zugewandt angeordnet, und in dieser Stellung vorgespannt.

Im geöffneten Zustand kann das Hydraulikfluid in Pfeilrichtung PR aus dem Versorgungsanschluss P über eine erste Durchlassöffnung 33 des ersten Schließelementes 30 in den Zuströmkanal 12 und von dort das zweite Schließelement 31 mit Hilfe dessen zweiter Durchlassöffnung 34 durchströmen, so dass es über den Hohlzylinder 8 in den Versorgungskanal 15 eintreten kann.

Bei der Dimensionierung der zweiten Durchlassöffnung 34 ist darauf zu achten, dass ihr Durchmesser einerseits kleiner ist, als ein im Hohlzylinder 8 ausgebildeter kleinster Durchmesser und anderseits groß genug ist, damit das Hydraulikfluid auch bei hohen Drehzahlen in ausreichend kurzer Zeit in den Ventilkolben 4 einströmen kann. Der Vorteil einer kleineren Dimensionierung des Durchmessers der zweiten Durchlassöffnung 34 ist darin zu sehen, dass das aus dem Ventilkolben 4 in Richtung des Rückschlagventils 13 strömende Hydraulikfluid zumindest teilweise direkt auf die dritte Anströmfläche 42 trifft und diese gegen das erste Schließelement 30 schieben kann, so dass ein Schließen des Rückschlagventils 13 beschleunigt ist.

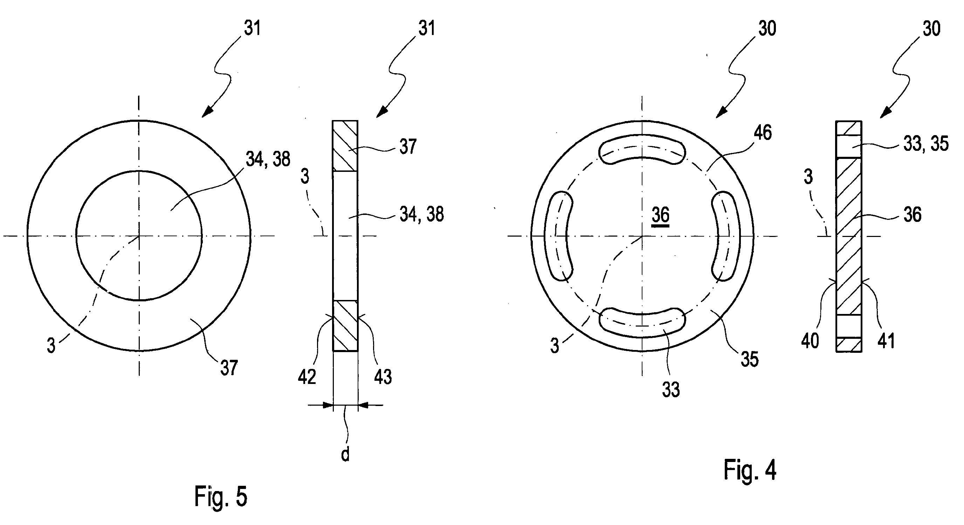

Die erste Durchlassöffnung 33 ist in einem ringförmigen ersten äußeren Abschnitt 35 des ersten Schließelementes 30 ausgebildet, wobei der Begriff des äußeren Abschnitts dabei so zu verstehen ist, dass ein radialer Abstand des äußeren Abschnittes 35 von einem Mittelpunkt des ersten Schließelementes 30 größer ist als ein radialer Abstand eines ersten inneren Abschnittes 36 des ersten Schließelementes 30. Die erste Durchlassöffnung 33 wird mit Hilfe von Stegen 46 in vier Durchlassöffnungsabschnitte geteilt, wobei die Stege 46 zu Realisierung eines einfachen Aufbaus des ersten Schließelementes 30 notwendig sind und lediglich einer Begrenzung der ersten Durchlassöffnung 33 in radialer Richtung dienen. Die erste Durchlassöffnung 33 ist unter Bereitstellung eines möglichst großen effektiven Strömungsquerschnitts im ersten äußeren Abschnitt 35 nutförmig ausgebildet, s. Fig. 4.

Das zweite Schließelement 31 ist in seinem zweiten äußeren Abschnitt 37 undurchströmbar ausgestaltet, wobei sein zweiter innerer Abschnitt 38 durchströmbar ist und die kreisförmige zweite Durchlassöffnung 34 aufweist. Mit anderen Worten ist das zweite Schließelement 31 ist in Form einer Ringscheibe gestaltet, s. Fig. 5.

Die Durchlassöffnungen 33, 34 sind so angeordnet, dass die erste Durchlassöffnung 33 dem undurchströmen zweiten äußeren Abschnitt 37 und die zweite Durchlassöffnung 34 dem undurchströmbaren ersten inneren Abschnitt 36 gegenüberliegen.

Sofern der Druck stromab des Rückschlagventils 13 größer ist als der Druck stromauf des Rückschlagventils 13, bspw. sofern ein Druckstoß infolge von Nockenwellenwechselmomenten stromab des Rückschlagventils 13 auf das zweite Schließelement 31 wirkt, wird das zweite Schließelement 31 durch eine auf seine dem Ventilkolben 4 zugewandt ausgebildete dritte Anströmfläche 42 wirkende Kraft das Druckstoßes, auf das erste Schließelement 30 gedrückt, so dass durch die entsprechend positionierten Durchlassöffnungen 33, 34 diese von dem jeweils anderen Schließelement 31, 30 undurchströmbar versperrt sind.

Das axial bewegbare zweite Schließelement 31 ist radial an seinem Umfang im Zuströmkanal 12 in Form einer Gleitlagerung gelagert, so dass in Abhängigkeit einer axialen Dicke d des zweiten Schließelementes 31 ein Verschleiß durch Kavitation oder Abrasion sehr gering ist. Die axiale Dicke d kann sehr klein gehalten werden, da das zweite Schließelement 31 in seiner Dichtfunktion lediglich die erste Durchlassöffnung 33 mit Hilfe seiner vierten Anströmfläche 43 bedecken muss, da es aufgrund des stromab wirkenden Druckes an das erste Schließelement 30 gedrückt wird.

Die in diesem Ausführungsbeispiel dargestellte Form des ersten Schließelementes 30 und des zweiten Schließelementes 31 und der entsprechend ausgestalteten Durchlassöffnungen 33, 34 erlaubt eine günstige Dimensionierung der Durchlassöffnungen 33, 34, sodass auch bei hohen Drehzahlen in kurzer Zeit ausreichend Hydraulikfluid aus dem Versorgungsanschluss P in den Ventilkolben 4 strömen kann, so dass ein schnelles Ansprechen des Hydraulikventils 1, bzw. eine schnelle Reaktionszeit bzw. schnelle Schaltzeit realisiert ist.

Begünstigend für die schnelle Reaktionszeit ist ebenso, unter Einsatz entsprechender Materialien, ein realisierbares geringes Gewicht des bewegbaren zweiten Schließeelementes 31.

Das Federelement 32 wirkt die axiale Bewegung des zweiten Schließelementes 31 unterstützend und drückt zur Unterstützung des gesicherten Schließens das zweite Schließelement 31 gegen das erste Schließelement 30. Mit Hilfe des Federelementes 32 ist das Ansprechverhalten des Hydraulikventils 1 aufgrund einer verbesserten Dynamik des Rückschlagventils 13 gegenüber bekannten Rückschlagventilen deutlich verbessert. Zusätzlich dient das Federelement 32 einer Dämpfung von Druckstößen, welche über den Versorgungsanschluss P im Zuströmkanal 12 auftreten können und erzielt somit eine druckstoßfreie Beaufschlagung des Ventilkolbens 4 durch das Hydraulikfluid.

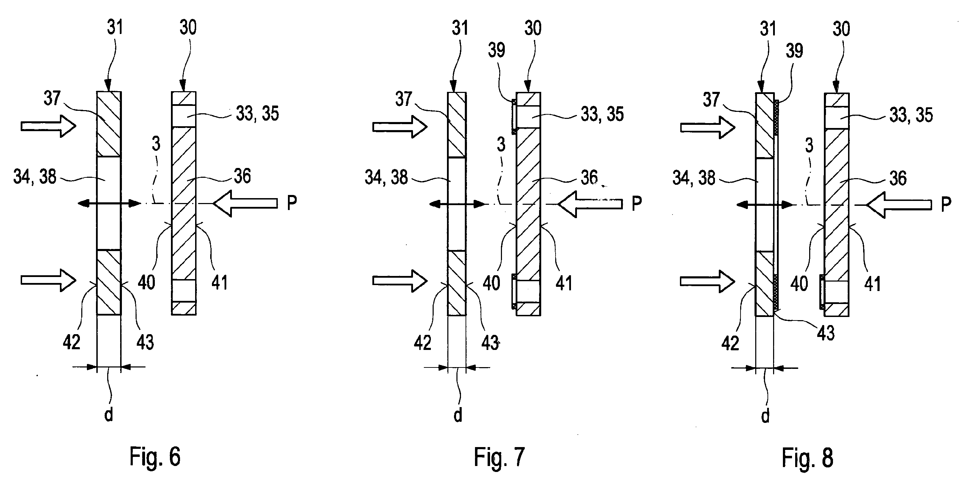

Fig. 6 zeigt in einer Prinzipdarstellung das erste Schließelement 30 und das zweite Schließelement 31 in einem Längsschnitt in einer ersten Relativposition. Abhängig von den am Rückschlagventil 13 anliegenden Drücken, bewegt sich das zweite Schließelement 31 in axialer Richtung. Ist der Druck infolge von Druckstößen auf der dem Ventilkolben 4 zugewandten Seite des Rückschlagventils 13 größer als der auf der Seite des Versorgungsanschlusses P wirkende Druck, bewegt sich das zweite Schließelement 31 auf das erste Schließelement 30 zu bis ein dichtender Kontakt zwischen dem ersten Schließelement 30 und dem zweiten Schließelement 31 ausgebildet ist.

Eine verbesserte Dichtung des Rückschlagventils 13 kann mit Hilfe eines Dichtelementes 39 zwischen dem ersten Schließelement 30 und dem zweiten Schließelement 31 erreicht werden. Gemäß eines zweiten Ausführungsbeispiels, s. Fig. 7, ist das Dichtelement 39 an der dem zweiten Schließelement 31 gegenüberliegenden ersten Anströmfläche 40 ausgebildet. Ebenso kann das Dichtelement 39 an einer dem ersten Schließelement 30 gegenüberliegenden vierten Anströmfläche 43 angebracht sein, wie im dritten Ausführungsbeispiel gem. Fig. 8 gezeigt ist.

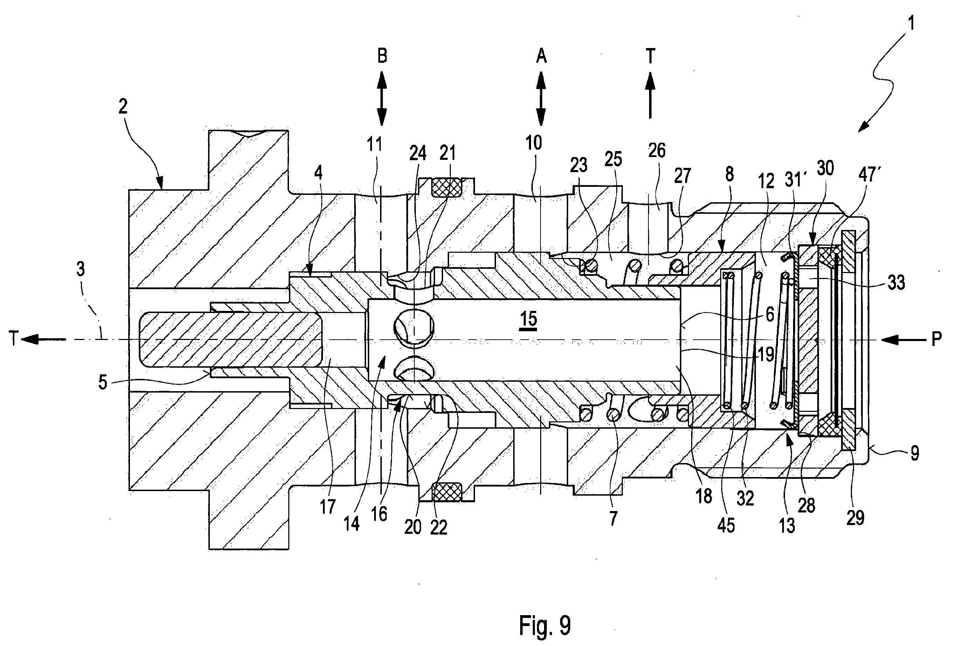

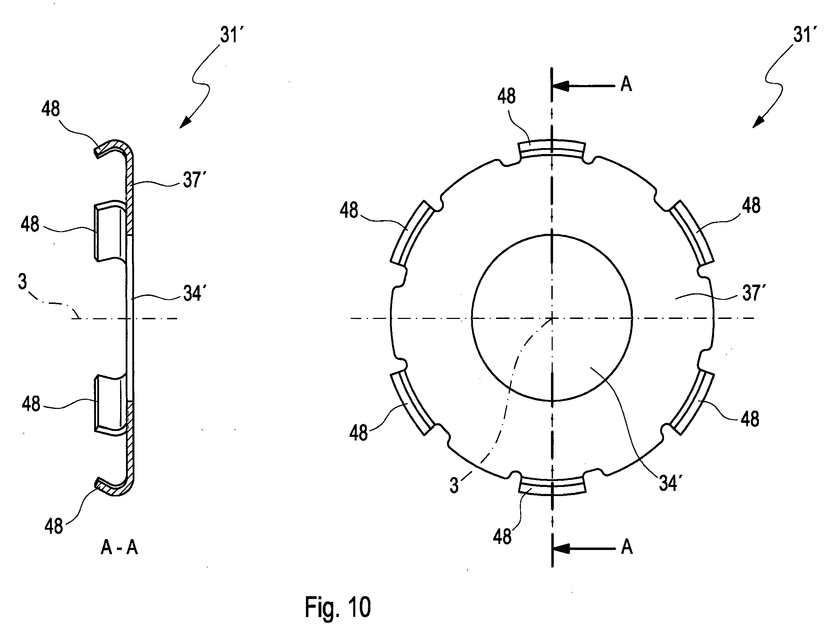

Den Fig. 9 und 10 sind ein zweites Ausführungsbeispiel eines erfindungsgemäßen Hydraulikventils 1 zu entnehmen. Dies unterscheidet sich zum ersten Ausführungsbeispiel gemäß den Fig. 2 bis 8 im Wesentlichen in der Ausgestaltung des zweiten Schließelementes 31'.

Wie Fig. 10 zu entnehmen ist, welche in einer Draufsicht und einem Längsschnitt das zweites Schließelement 31' zeigt, ist das zweite Schließelement 31' nicht als flache Ringscheibe ausgestaltet, sondern weist an seinem Umfang mehrere - hier beispielsweise sechs - gleichmäßig verteilte, gebogene Abschnitte 48 auf. Diese ohrenförmige Abschnitte 48 sind in Richtung Hohlzylinder 8 gebogen vorgesehen und verhindern ein Verkanten des zweiten Schließelementes 31' im Ventilgehäuse 2 ohne das oben beschriebene Zusammenwirken mit dem ersten Schließelement 30 zu beeinflussen. Ferner verbessern die Abschnitte 48 die Montierbarkeit des Schließelementes 31', da sie wie eine Einführfase wirken.

Das Schließelement 31' kann in einfacher Weise als Stanzbiegeteil vorgesehen werden.

Ferner kann das Formteil 47' als Filterelement ausgebildet werden.

### Bezugszeichenliste

- 1: Hydraulikventil
- 2: Ventilgehäuse
- 3: Längsachse
- 4: Ventilkolben
- 5: erste Stirnfläche
- 6: zweite Stirnfläche
- 7: Rückhalteelement
- 8: Hohlzylinder
- 9: Gehäusestirnfläche
- 10: erster Kanal
- 11: zweiter Kanal
- 12: Zuströmkanal
- 13: Rückschlagventil
- 14: Kanalsystem
- 15: Versorgungskanal
- 16: Kanalgruppe
- 17: erstes Kanalende
- 18: zweites Kanalende
- 19: Eintrittsöffnung
- 20: Mantelfläche
- 21: Austrittsöffnung
- 22: Innenfläche
- 23: erste Öffnung
- 24: zweite Öffnung
- 25: erster Spalt
- 26: dritter Kanal
- 27: dritte Öffnung
- 28: erster Absatz
- 29: Sicherungselement
- 30: erstes Schließelement
- 31: zweites Schließelement
- 31': zweites Schließelement
- 32: Federelement
- 33: erste Durchlassöffnung
- 34: zweite Durchlassöffnung
- 34': zweite Durchlassöffnung
- 35: erster äußerer Abschnitt
- 36: erster innerer Abschnitt
- 37: zweiter äußerer Abschnitt
- 37': zweiter äußerer Abschnitt
- 38: zweiter innerer Abschnitt
- 39: Dichtelement
- 40: erste Anströmfläche
- 41: zweite Anströmfläche
- 42: dritte Anströmfläche
- 43: vierte Anströmfläche
- 44: Strömungsquerschnitt
- 45: zweiter Absatz
- 46: Steg
- 47: Formelement
- 47': Formelement
- 48: Vorsprung

- A: erster Arbeitsanschluss
- B: zweiter Arbeitsanschluss
- D: Durchmesser
- P: Versorgungsanschluss
- PR: Pfeilrichtung
- T1: erster Tankzugang
- T2: zweiter Tankzugang
- d: Dicke

## Patentansprüche

1. Hydraulikventil für einen Schwenkmotorversteller einer Nockenwelle, mit einem Ventilgehäuse (2) mit einer Längsachse (3) und einem im Ventilgehäuse (2) entlang der Längsachse (3) axial verschiebbar positionierten Ventilkolben (4), wobei mit Hilfe des Ventilkolbens (4) ein erster Arbeitsanschluss (A) des Ventilgehäuses (2) und ein zweiter Arbeitsanschluss (B) des Ventilgehäuses (2) zu öffnen und zu schließen sind, wobei der erste Arbeitsanschluss (A) und der zweite Arbeitsanschluss (B) axial voneinander beabstandet sind, und mit einem Versorgungsanschluss (P) des Ventilgehäuses (2), welcher einer Versorgung des Hydraulikventils (1) mit einem mit Hilfe einer Fördereinrichtung geförderten Hydraulikfluid dient, wobei das Hydraulikfluid mit Hilfe eines durchströmbaren Kanalsystems (14) des Ventilkolbens (4) das Hydraulikventil (1) unterschiedlich durchströmen kann, und wobei im Hydraulikventil (1) in einem Zuströmkanal (12) des Ventilgehäuses (2), welcher dem Versorgungsanschluss (P) zugeordnet ist, ein Rückschlagventil (13) zum Öffnen und Schließen des Zuströmkanals (12) angeordnet ist, wobei das Rückschlagventil (13) ein scheibenförmiges durchströmbares erstes Schließelement (30) mit einer ersten Durchlassöffnung (33) und ein Federelement (32) umfasst,
**dadurch gekennzeichnet, dass**
das Rückschlagventil (13) ein durchströmbares zweites Schließelement (31, 31') mit einer zweiten Durchlassöffnung (34, 34') aufweist, wobei die erste Durchlassöffnung (33) einem undurchströmbaren zweiten äußeren Abschnitt (37, 37') des zweiten Schließelementes (31, 31') und die zweite Durchlassöffnung (34, 34') einem undurchströmbaren ersten inneren Abschnitt (36) des ersten Schließelementes (30) gegenüberliegen, so dass durch eine Relativbewegung zwischen dem ersten Schließelement (30) und dem zweiten Schließelement (31, 31') ein Öffnen oder Schließen des Rückschlagventils (13) herbeiführbar ist, wobei die erste Durchlassöffnung (33) nutartig und die zweite Durchlassöffnung (34, 34') kreisförmig ausgebildet ist.

2. Hydraulikventil nach Anspruch 1,
**dadurch gekennzeichnet, dass**
das erste Schließelement (30) unabhängig vom zweiten Schließelement (31, 31') ausgebildet ist.

3. Hydraulikventil nach Anspruch 1 oder 2,
**dadurch gekennzeichnet, dass**
das erste Schließelement (30) unbewegbar und das zweite Schließelement (31, 31') bewegbar ausgebildet ist.

4. Hydraulikventil nach einem der vorherigen Ansprüche,
**dadurch gekennzeichnet, dass**
das zweite Schließelement (31, 31') axial entlang der Längsachse (3) bewegbar ausgebildet ist.

5. Hydraulikventil nach einem der vorherigen Ansprüche,
**dadurch gekennzeichnet, dass**
das zweite Schließelement (31, 31') scheibenförmig ausgebildet ist.

6. Hydraulikventil nach einem der vorherigen Ansprüche,
**dadurch gekennzeichnet, dass**
die erste Durchlassöffnung (33) in einem ersten äußeren Abschnitt (35) des ersten Schließelementes (30) und die zweite Durchlassöffnung (34, 34') in einem zweiten inneren Abschnitt (38) des zweiten Schließelementes (31, 31') ausgebildet sind.

7. Hydraulikventil nach einem der vorherigen Ansprüche,
**dadurch gekennzeichnet, dass**
zur axialen Sicherung des ersten Schließelementes (30) im Zuströmkanal (12) ein erster Absatz (28) ausgebildet ist.

8. Hydraulikventil nach einem der vorherigen Ansprüche,
**dadurch gekennzeichnet, dass**
an einer dem zweiten Schließelement (31) gegenüberliegenden ersten Anströmfläche (40) des ersten Schließelementes (30) und/oder an einer dem ersten Schließelement (30) gegenüberliegenden vierten Anströmfläche (43) des zweiten Schließelementes (31) eine Dichtelement (39) ausgebildet ist.

9. Hydraulikventil nach einem der vorherigen Ansprüche,
**dadurch gekennzeichnet, dass**
eine axiale Bewegung des ersten Schließelementes (30) oder des zweiten Schließelementes (31, 31') mit Hilfe des Federelementes (32) unterstützt ist.

10. Hydraulikventil nach einem der vorherigen Ansprüche,
**dadurch gekennzeichnet, dass**
das zweite Schließelement (31') mehrere am Umfang verteilte, gebogene Abschnitte (48) aufweist.

## Claims

1. Hydraulic valve for a pivoting motor adjuster of a camshaft, having a valve housing (2) with a longitudinal axis (3) and a valve piston (4) which is positioned in the valve housing (2) such that it can be displaced axially along the longitudinal axis (3), wherein a first working connector (A) of the valve housing (2) and a second working connector (B) of the valve housing (2) can be opened and closed with the aid of the valve piston (4), wherein the first working connector (A) and the second working connector (B) are spaced apart from one another axially, and having a supply connector (P) of the valve housing (2) which serves to supply the hydraulic valve (1) with a hydraulic fluid which is delivered with the aid of a delivery device, wherein the hydraulic fluid can flow through the hydraulic valve (1) differently with the aid of a duct system (14) of the valve piston (4), through which flow can pass, and wherein a check valve (13) for opening and closing an inflow duct (12) is arranged in the hydraulic valve (1) in the inflow duct (12) of the valve housing (2) which is assigned to the supply connector (P), wherein the check valve (13) comprises a disc-shaped first closing element (30), through which flow can pass and which has a first passage opening (33), and a spring element (32), **characterized in that** the check valve (13) has a second closing element (31, 31'), through which flow can pass and which has a second passage opening (34, 34'), wherein the first passage opening (33) lies opposite a second outer section (37, 37') of the second closing element (31, 31'), through which flow cannot pass, and the second passage opening (34, 34') lies opposite a first inner section (36) of the first closing element (30), through which flow cannot pass, with the result that opening or closing of the check valve (13) can be brought about by way of a relative movement between the first closing element (30) and the second closing element (31, 31'), wherein the first passage opening (33) is of groove-like configuration and the second passage opening (34, 34') is of circular configuration.

2. Hydraulic valve according to Claim 1, **characterized in that** the first closing element (30) is configured independently from the second closing element (31, 31').

3. Hydraulic valve according to Claim 1 or 2, **characterized in that** the first closing element (30) is of immovable configuration and the second closing element (31, 31') is of movable configuration.

4. Hydraulic valve according to one of the preceding claims, **characterized in that** the second closing element (31, 31') is configured such that it can be moved axially along the longitudinal axis (3).

5. Hydraulic valve according to one of the preceding claims, **characterized in that** the second closing element (31, 31') is of disc-shaped configuration.

6. Hydraulic valve according to one of the preceding claims, **characterized in that** the first passage opening (33) is configured in a first outer section (35) of the first closing element (30) and the second passage opening (34, 34') is configured in a second inner section (38) of the second closing element (31, 31').

7. Hydraulic valve according to one of the preceding claims, **characterized in that** a first shoulder (28) is configured in the inflow duct (12) in order to axially secure the first closing element (30).

8. Hydraulic valve according to one of the preceding claims, **characterized in that** a sealing element (39) is configured on a first incident flow face (40) of the first closing element (30) which lies opposite the second closing element (31) and/or on a fourth incident flow face (43) of the second closing element (31) which lies opposite the first closing element (30).

9. Hydraulic valve according to one of the preceding claims, **characterized in that** an axial movement of the first closing element (30) or the second closing element (31, 31') is assisted with the aid of the spring element (32).

10. Hydraulic valve according to one of the preceding claims, **characterized in that** the second closing element (31') has a plurality of curved sections (48) which are distributed on the circumference.

## Revendications

1. Soupape hydraulique pour un élément de réglage de moteur oscillant d'arbre à cames, avec un carter de soupape (2) avec un axe longitudinal (3) et un piston de soupape (4) positionné de façon à pouvoir coulisser dans le plan axial dans le carter de soupape (2) le long de l'axe longitudinal (3), un premier raccord de travail (A) du carter de soupape (2) et un deuxième raccord de travail (B) du carter de soupape (2) pouvant être ouverts et fermés à l'aide du piston de soupape (4), le premier raccord de travail (A) et le deuxième raccord de travail (B) étant séparés l'un de l'autre dans le plan axial et avec un raccord d'alimentation (P) du carter de soupape (2) servant à alimenter la soupape hydraulique (1) en fluide hydraulique transporté à l'aide d'un dispositif de transport, le fluide hydraulique pouvant traverser de façon différente la soupape hydraulique (1) à l'aide d'un système de canaux (14) traversable du piston de soupape (4) et une soupape de retenue (13) étant disposée dans la soupape hydraulique (1), dans un canal d'amenée (12) du carter de soupape (2) associé au raccord d'alimentation (P), pour l'ouverture et la fermeture du canal d'amenée (12), la soupape de retenue (13) comprenant un premier élément de fermeture (30) traversable en forme de disque avec une première ouverture de passage (33) ainsi qu'un élément à ressort (32), **caractérisée en ce que** la soupape de retenue (13) comporte un deuxième élément de fermeture (31, 31') traversable avec une deuxième ouverture de passage (34, 34'), la première ouverture de passage (33) étant placée en face d'une deuxième section extérieure (37, 37') non traversable du deuxième élément de fermeture (31, 31') et la deuxième ouverture de passage (34, 34') étant placée en face d'une première section intérieure (36) non traversable du premier élément de fermeture (30), de sorte qu'une ouverture ou fermeture de la soupape de retenue (13) peut être entraînée par un mouvement relatif entre le premier élément de fermeture (30) et le deuxième élément de fermeture (31, 31'), la première ouverture de passage (33) étant réalisée en forme de rainure et la deuxième ouverture de passage (34, 34') étant réalisée en forme de cercle.

2. Soupape hydraulique selon la revendication 1, **caractérisée en ce que** le premier élément de fermeture (30) est réalisé indépendamment du deuxième élément de fermeture (31, 31').

3. Soupape hydraulique selon la revendication 1 ou 2, **caractérisée en ce que** le premier élément de fermeture (30) est réalisé de façon immobile et que le deuxième élément de fermeture (31, 31') est réalisé de façon mobile.

4. Soupape hydraulique selon l'une quelconque des revendications précédentes, **caractérisée en ce que** le deuxième élément de fermeture (31, 31') est réalisé de façon à pouvoir se déplacer dans le plan axial le long de l'axe longitudinal (3).

5. Soupape hydraulique selon l'une quelconque des revendications précédentes, **caractérisée en ce que** le deuxième élément de fermeture (31, 31') est réalisé en forme de disque.

6. Soupape hydraulique selon l'une quelconque des revendications précédentes, **caractérisée en ce que** la première ouverture de passage (33) est réalisée dans une première section extérieure (35) du premier élément de fermeture (30) et que la deuxième ouverture de passage (34, 34') est réalisée dans une deuxième section intérieure (38) du deuxième élément de fermeture (31, 31').

7. Soupape hydraulique selon l'une quelconque des revendications précédentes, **caractérisée en ce que** la fixation axiale du premier élément de fermeture (30) est réalisée dans le canal d'amenée (12) par le biais d'un premier épaulement (28).

8. Soupape hydraulique selon l'une quelconque des revendications précédentes, **caractérisée en ce qu'**un élément d'étanchéité (39) est réalisé au niveau d'une première surface d'afflux (40), opposée au deuxième élément de fermeture (31), du premier élément de fermeture (30) et/ou au niveau d'une quatrième surface d'afflux (43), opposée au premier élément de fermeture (30), du deuxième élément de fermeture (31).

9. Soupape hydraulique selon l'une quelconque des revendications précédentes, **caractérisée en ce qu'**un mouvement axial du premier élément de fermeture (30) ou du deuxième élément de fermeture (31, 31') est soutenu à l'aide de l'élément à ressort (32).

10. Soupape hydraulique selon l'une quelconque des revendications précédentes, **caractérisée en ce que** le deuxième élément de fermeture (31') comporte plusieurs sections (48) incurvées réparties sur la périphérie.
